# FASCICULE DE BREVET EUROPEEN

(11) **EP 0 551 231 B1**
(45) Date de publication et mention de la délivrance du brevet: **24.04.1996**
(21) Numéro de dépôt: 93400025.8
(22) Date de dépôt: 07.01.1993
(51) Int. Cl.: F16C 17/02, B65H 75/40

(54) **Dispositif tournant, en particulier enrouleur à usage électrique**
Wickelvorrichtung, insbesondere Trommel für elektrisches Kabel
Winding device, particularly for electric cable reel

(30) Priorité: 10.01.1992 FR 9200186
(43) Date de publication de la demande: 14.07.1993
(73) Titulaire: LEGRAND, F-87045 Limoges Cédex (FR)
(72) Inventeur: Jarry, Patrice, F-72590 Mont Saint Jean (FR)
(74) Mandataire: CABINET BONNET-THIRION

(56) Documents cités:
- EP-A- 0 083 872
- EP-A- 0 360 350
- CA-A- 1 119 575
- DE-C- 0 931 415
- GB-A- 1 251 160

## Description

La présente invention concerne d'une manière générale les dispositifs tournants, dans le sens où il est parlé de "machines tournantes" pour certaines machines électriques. Il s'agit, en pratique, des dispositifs, qui, tels les enrouleurs, et plus particulièrement les enrouleurs à usage électrique, comportent, globalement, un noyau central cylindrique monté rotatif dans un corps annulaire (CA-A-1119575).

L'un des problèmes à résoudre dans la réalisation des dispositifs tournants de ce genre est d'assurer le guidage en rotation du noyau central cylindrique par rapport au corps annulaire.

Le plus souvent, à ce jour, ce guidage en rotation se fait circonférentiellement sur la totalité de la périphérie interne du noyau central cylindrique lorsqu'il s'agit de dispositifs tournants de moindre importance, et, lorsqu'il s'agit de dispositifs tournants plus conséquents, il se fait à l'aide de galets qui, montés rotatifs sur le corps annulaire, ne portent que ponctuellement, de place en place, sur cette périphérie.

Dans le premier cas, le frottement est important, au risque d'incidents de fonctionnement.

Dans le deuxième cas, qui est le cas le plus fréquent, il y a un risque d'usure pour l'axe des galets rotatifs mis en oeuvre et un risque de casse d'un tel axe lors d'un choc ou d'une chute ; en outre, il est le plus souvent nécessaire de prévoir un frein pour bloquer en rotation le noyau central périphérique en fin de course, compte tenu de l'inertie de celui-ci, et il en résulte inévitablement une certaine complication, au détriment des coûts.

La présente invention a d'une manière générale pour objet une disposition permettant très simplement et économiquement de donner satisfaction dans tous les cas.

De manière plus précise, elle a pour objet un dispositif tournant du genre comportant les caractéristiques de la revendication 1.

Ainsi, un compromis particulièrement avantageux est trouvé entre, d'une part, un frottement trop important, et, d'autre part, un frottement trop réduit.

En l'espèce, le frottement est suffisant pour permettre une régulation de la vitesse de rotation du noyau central cylindrique et son arrêt en fin de course.

Suivant une première forme de réalisation, les bossages d'appui ainsi mis en oeuvre constituent directement par eux-mêmes des patins de glissement pour le noyau central cylindrique.

En variante, il peut être associé à chacun d'eux une lamelle, qui, interposée entre un tel bossage d'appui et le noyau central cylindrique, constitue un tel patin de glissement pour ce dernier.

Dans ce cas, cette lamelle peut avantageusement être en une matière différente de celle du corps annulaire, ce qui, au moins dans certaines applications, permet si désiré, de réduire, ou d'augmenter, le frottement, pour l'ajuster au mieux à l'effet désiré.

Dans tous les cas, les risques d'usure sont négligeables, car cette usure se répartit sur l'ensemble du pourtour cylindrique du noyau central périphérique.

De même, les risques de casse en cas de choc ou de chute sont avantageusement réduits.

Certes il est connu, par le brevet canadien No 1 119 575, de mettre en oeuvre des bossages d'appui pour le guidage en rotation du noyau central cylindrique d'un enrouleur.

Mais, dans ce brevet canadien, ces bossages d'appui appartiennent au noyau central cylindrique lui-même.

La réalisation pratique de celui-ci s'en trouve compliquée, et il peut éventuellement en être de même de son équilibrage.

En outre, ainsi disposés sur le noyau central cylindrique, ces bossages d'appui ne se prêtent pas à la mise en oeuvre éventuelle de patins si désiré.

Il n'en est pas de même lorsque, suivant l'invention, ces bossages d'appui sont disposés sur le corps annulaire correspondant.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un dispositif tournant suivant l'invention ;
la figure 2 en est, à échelle supérieure, une vue transversale en coupe, suivant la ligne II-II de la figure 1 ;
la figure 3 en est, à échelle encore supérieure, une vue partielle en coupe axiale, suivant la ligne brisée III-III de la figure 2 ;
la figure 4 reprend, à échelle également supérieure, le détail de la figure 2 repéré par un encart IV sur cette figure 2 ;
la figure 5 est une vue analogue à celle de la figure 4, pour une variante de réalisation ;
la figure 6 est une vue partielle en coupe axiale de cette variante de réalisation, suivant la ligne VI-VI de la figure 5.

Ces figures illustrent, à titre d'exemple, l'application de l'invention à un enrouleur, et, plus précisément, à un enrouleur à usage électrique.

Autrement dit, le dispositif tournant 10 représenté sur ces figures est un tel enrouleur.

Ce dispositif tournant 10 étant bien connu par lui-même, et ne relevant pas de la présente invention, il ne sera pas décrit dans tous ses détails ici.

Seuls en seront décrits les détails nécessaires à la compréhension de l'invention.

Indépendamment, donc, d'autres dispositions propres notamment à l'entrée et à la sortie du câble électrique à enrouler, ce dispositif tournant 10 comporte, globalement, un noyau central cylindrique 11, qui, monté rotatif dans un corps annulaire 12, est propre à la réception de ce câble électrique.

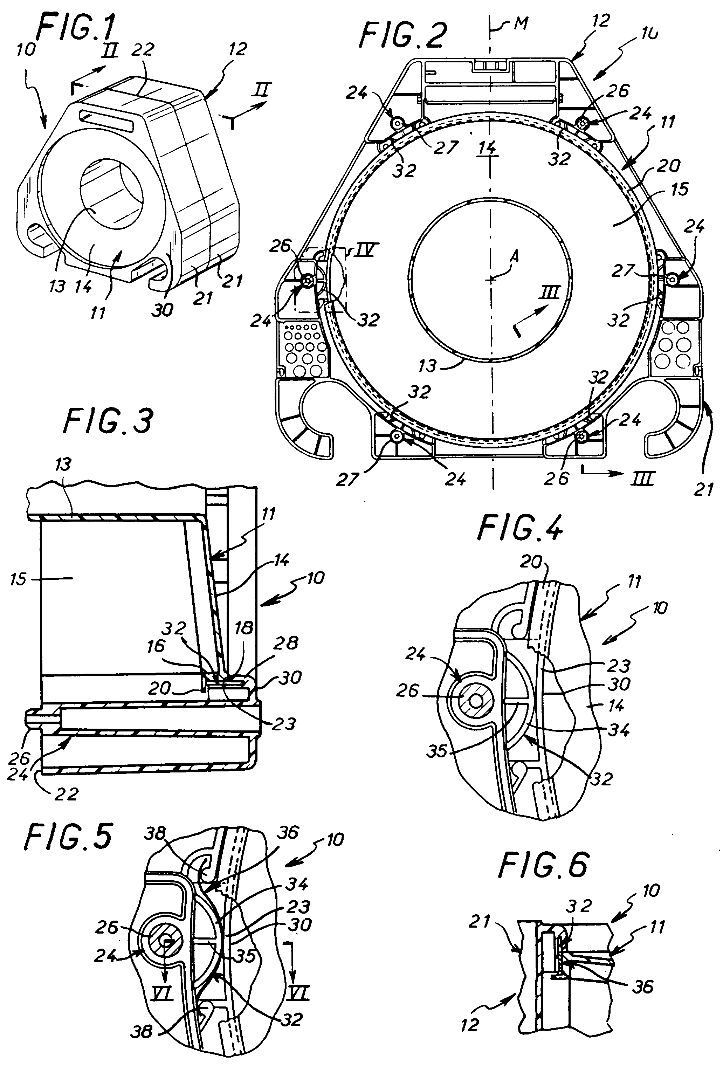

Soit A l'axe de ce noyau central cylindrique 11, tel que schématisé par sa trace sur la figure 2.

Dans la forme de réalisation représentée, le noyau central cylindrique 11 comporte, parallèlement à l'axe A, un moyeu 13, et, transversalement par rapport à cet axe A, deux joues 14, qui, disposées chacune respectivement aux extrémités du moyeu 13, s'étendent radialement vers l'extérieur par rapport à celui-ci et définissent avec ce moyeu 13 le volume 15 nécessaire à l'enroulement du câble électrique concerné.

L'ensemble peut être d'un seul tenant, en étant réalisé par exemple en matière synthétique.

Dans la forme de réalisation représentée, les joues 14 s'étendent chacune respectivement légèrement en oblique par rapport à un plan perpendiculaire à l'axe A, en s'écartant l'une de l'autre au fur et à mesure qu'elles s'écartent de cet axe A.

En outre, dans cette forme de réalisation, le noyau central périphérique 11 comporte, à sa périphérie externe, c'est-à-dire à la périphérie externe de chacune de ces joues 14, une jante 16.

Cette jante 16 participe au raidissement de la joue 14 qu'elle affecte et elle s'étend axialement de part et d'autre de celle-ci.

D'un premier côté, et il s'agit en pratique du côté extérieur, sa tranche forme transversalement un épaulement 18.

De l'autre côté, et il s'agit en pratique du côté intérieur, elle est bordée par un retour 20 qui s'étend radialement en direction opposée à l'axe A.

Dans la forme de réalisation représentée, le corps annulaire 12 est formé, quant à lui, de deux demi-corps 21, qui, dûment affrontés l'un à l'autre suivant une surface de jonction 22 commune, en pratique un plan transversal perpendiculaire à l'axe A, et dûment solidarisés l'un à l'autre, enserrent, librement, entre deux épaulements transversaux 23 dont un seul est visible sur les figures, le noyau central cylindrique 11.

En pratique, dans cette forme de réalisation, ces deux demi-corps 21 ne sont solidarisés l'un à l'autre que ponctuellement, par des zones de fixation 24 établies circonférentiellement à distance les unes des autres.

Par exemple, et tel que représenté, six zones de fixation 24 sont ainsi prévues à 60° les unes par rapport aux autres, et chacune d'elles met en oeuvre, d'une part, en saillie sur la surface de jonction 22 sur l'un des demi-corps 21, un ergot 26, et, d'autre part, en creux sur cette surface de jonction 22 sur l'autre demi-corps 21, un logement 27 propre à l'engagement d'un tel ergot 26.

Préférentiellement, chacun des deux demi-corps 21 comporte ainsi une alternance d'ergots 26 et de logements 27 pour la constitution des zones de fixation 24, et, celles-ci étant établies symétriquement de part et d'autre d'un plan vertical M passant par l'axe A, ces deux demi-corps 21 peuvent avantageusement être identiques l'un à l'autre.

Comme l'axe A, le plan M est schématisé par sa trace sur la figure 2.

En pratique, les zones de fixation 24 sont établies suivant une circonférence qui s'étend radialement au-delà de celle suivant laquelle s'étend l'épaulement transversal 23.

En pratique, également, cet épaulement transversal 23 est formé par la tranche d'une collerette 28 issue d'un flasque 30, qui, parallèlement à la surface de jonction 22, et donc perpendiculairement à l'axe A, forme, pour chacun des demi-corps 21, la paroi de façade de celui-ci.

Les demi-corps 21 ainsi constitués peuvent par exemple être réalisés en matière synthétique.

Suivant l'invention, le corps annulaire 12 que constituent ces demi-corps 21 comporte, localement, radialement en saillie sur sa périphérie interne, au moins deux bossages d'appui 32, qui sont circonférentiellement à distance l'un de l'autre, et qui l'un et l'autre sont fixes.

Lorsque seuls deux de tels bossages d'appui 32 sont prévus, ils sont disposés à la partie basse de l'ensemble, en étant chacun respectivement établis symétriquement de part et d'autre du plan vertical M passant par l'axe A.

Une telle disposition peut être adoptée lorsque le dispositif tournant 10 doit toujours être utilisé en position verticale.

Préférentiellement, cependant, et tel que représenté, il est prévu, répartis circulairement autour de l'axe A, au moins trois bossages d'appui 32, pour que ce dispositif tournant 10 puisse être utilisé dans n'importe quelle position.

Dans la forme de réalisation représentée, le corps annulaire 12 comporte autant de bossages d'appui 32 qu'il comporte de zones de fixation 24, et, donc, en l'espèce, six.

En pratique, chacun de ces bossages d'appui 32 est établi radialement au droit d'une zone de fixation 24, pour l'affermissement de son assise.

En pratique, également, les bossages d'appui 32 sont d'un seul tenant avec le corps annulaire 12.

Bien entendu, il y a de tels bossages d'appui 32 sur l'un et l'autre des deux demi-corps 21 constitutifs de ce corps annulaire 12, et ces bossages d'appui 32 viennent de moulage d'une seule et même pièce avec chacun de ces deux demi-corps 21.

En pratique, les bossages d'appui 32 s'étendent axialement à compter de la face interne du flasque 30 de ces deux demi-corps 21.

Radialement en saillie sur une circonférence de diamètre supérieur à celle suivant laquelle s'étend l'épaulement transversal 23, ils s'étendent radialement en direction de l'axe A jusqu'au voisinage immédiat de cet épaulement transversal 23.

Les bossages d'appui 32, qui sont tous identiques, sont globalement convexes.

Ils sont chacun individuellement constitués par une paroi arquée 34 qui s'étend suivant une portion de cylindre de part et d'autre de la zone de fixation 24 correspondante, et qui, dans sa partie médiane, est contrebutée par une nervure de raidissement 35 la reliant radialement à cette zone de fixation 24.

Par exemple, et tel que représenté, la section transversale des bossages d'appui 32 ainsi constitués est un arc de cercle.

Quoi qu'il en soit, les bossages d'appui 32 de chacun des demi-corps 21 coopèrent avec la jante 16 correspondante du noyau central cylindrique 11.

Dans la forme de réalisation plus particulièrement représentée sur les figures 1 à 4, l'un au moins des bossages d'appui 32, et en pratique chacun de ceux-ci, constitue directement par lui-même un patin de glissement pour le noyau central cylindrique 11.

Autrement dit, dans cette forme de réalisation, ce noyau central cylindrique 11 porte directement par ses jantes 16 sur les bossages d'appui 32 des deux demi-corps 21.

En variante, figures 5 et 6, à l'un au moins des bossages d'appui 32, et en pratique à chacun de ceux-ci, est associée une lamelle 36, qui, interposée entre lui et le noyau central cylindrique 11, et, plus précisément, entre lui et la jante 16 correspondante de ce noyau central cylindrique 11, constitue un patin de glissement pour ce noyau central cylindrique 11.

En pratique, cette lamelle 36, qui est globalement conformée en oméga, est librement insérée entre, d'une part, le bossage d'appui 32 auquel elle est associée, qu'elle contourne tangentiellement dans sa zone médiane, et, d'autre part, deux contre-bossages 38, qui, issus du demi-corps 21 concerné du corps annulaire 12, encadrent ce bossage d'appui 32.

La lamelle 36 ainsi mise en oeuvre est axialement retenue, d'un premier côté, par le noyau central cylindrique 11, et, plus précisément, par le retour 20 bordant radialement de ce côté la jante 16 correspondante de celui-ci, et, d'autre part, du côté opposé au précédent, par le corps annulaire 12, et, plus précisément, par le demi-corps 21 concerné de ce corps annulaire 12.

Pour le reste, les dispositions sont du même type que les précédentes.

La présente invention ne se limite d'ailleurs pas aux formes de réalisation décrites et représentées, mais englobe toute variante d'exécution.

## Revendications

1. Dispositif tournant, du genre comportant un noyau central cylindrique (11) monté rotatif dans un corps annulaire (12), avec, intervenant entre eux, pour le guidage en rotation du noyau central cylindrique (11), au moins deux bossages d'appui (32), qui sont circonférentiellement à distance l'un de l'autre, caractérisé en ce que le corps annulaire (12) comporte, localement, radialement en saillie sur sa périphérie interne, les bossages d'appui (32), en sorte que l'un et l'autre de ceux-ci sont fixes.

2. Dispositif tournant suivant la revendication 1, caractérisé en ce que le corps annulaire (12) comporte, répartis circulairement, au moins trois bossages d'appui (32).

3. Dispositif tournant suivant l'une quelconque des revendications 1, 2, caractérisé en ce que le corps annulaire (12) comporte six bossages d'appui (32).

4. Dispositif tournant suivant l'une quelconque des revendications 1 à 3, caractérisé en ce que les bossages d'appui (32) sont d'un seul tenant avec le corps annulaire (12).

5. Dispositif tournant suivant l'une quelconque des revendications 1 à 4, caractérisé en ce que les bossages d'appui (32) sont globalement convexes.

6. Dispositif tournant suivant la revendication 5, caractérisé en ce que les bossages d'appui (32) sont chacun individuellement constitués par une paroi arquée (34) contrebutée par une nervure de raidissement (35) dans sa partie médiane.

7. Dispositif tournant suivant l'une quelconque des revendications 1 à 6, caractérisé en ce que l'un au moins des bossages d'appui (32) constitue directement par lui-même un patin de glissement pour le noyau central cylindrique (11).

8. Dispositif tournant suivant l'une quelconque des revendications 1 à 6, caractérisé en ce que, à l'un au moins des bossages d'appui (32) est associée une lamelle (36), qui, interposée entre lui et le noyau central cylindrique (11), constitue un patin de glissement pour ce noyau central cylindrique (11).

9. Dispositif tournant suivant la revendication 8, caractérisé en ce que le bossage d'appui (32) est encadré par deux contre-bossages (38), qui s'étendent radialement en sens opposé à lui, et entre lesquels et lui est librement insérée la lamelle (36) associée.

10. Dispositif tournant suivant la revendication 9, caractérisé en ce que la lamelle (36) associée à un bossage d'appui (32) est axialement retenue, d'un premier côté, par le noyau central cylindrique (11), et, du côté opposé au précédent, par le corps annulaire (12).

11. Dispositif tournant suivant la revendication 10, caractérisé en ce que, le noyau central cylindrique (11) comportant à sa périphérie externe une jante (16), qui s'étend parallèlement à son axe (A) et avec laquelle coopèrent les bossages d'appui (32) du corps annulaire (12), la lamelle (36) associée à un tel bossage d'appui (32) est retenue axialement d'un côté par un retour (20) bordant radialement ladite jante (16).

12. Dispositif tournant suivant l'une quelconque des revendications 1 à 11, caractérisé en ce que, le corps annulaire (12) étant formé de deux demi-corps (21), qui, dûment affrontés l'un à l'autre suivant une surface de jonction (22) commune, et dûment solidarisés l'un à l'autre, enserrent librement, entre deux épaulements transversaux (23), le noyau central cylindrique (11), il y a des bossages d'appui (32) sur l'un et l'autre desdits demi-corps (21).

13. Dispositif tournant suivant la revendication 12, caractérisé en ce que les deux demi-corps (21) constitutifs du corps annulaire (12) n'étant solidarisés l'un à l'autre que ponctuellement, par des zones de fixation (24) établies circonférentiellement à distance les unes des autres, chacun des bossages d'appui (32) est établi radialement au droit d'une telle zone de fixation (24).

14. Dispositif tournant suivant la revendication 13, caractérisé en ce qu'il y a autant de bossages d'appui (32) que de zones de fixation (24).

## Patentansprüche

1. Drehvorrichtung mit einem zentralen zylindrischen Kern (11), der drehbar in einem ringförmigen Körper (12) angebracht ist, wobei zwischen diesen beiden zur Drehführung des zentralen zylindrischen Kerns (11) wenigstens zwei Lageransätze (32) vorgesehen sind, die in Umfangsrichtung einen gegenseitigen Abstand voneinander aufweisen,
dadurch gekennzeichnet,
daß der ringförmige Körper (12) die Lageransätze (32) lokal sowie an seinem Innenumfang radial vorspringend aufweist, derart, daß der eine wie der andere dieser Lageransätze feststehend ist.

2. Drehvorrichtung nach Anspruch 1,
dadurch gekennzeichnet,
daß der ringförmige Körper (12) über einen Kreis verteilt wenigstens drei Lageransätze (32) aufweist.

3. Drehvorrichtung nach Anspruch 1 oder 2,
dadurch gekennzeichnet,
daß der Drehkörper (12) sechs Lageransätze (32) aufweist.

4. Drehvorrichtung nach einem der Ansprüche 1 bis 3,
dadurch gekennzeichnet,
daß die Lageransätze (32) einstückig mit dem ringförmigen Körper (12) ausgebildet sind.

5. Drehvorrichtung nach einem der Ansprüche 1 bis 4,
dadurch gekennzeichnet,
daß die Lageransätze (32) im ganzen konvex sind.

6. Drehvorrichtung nach Anspruch 5,
dadurch gekennzeichnet,
daß die Lageransätze (32) jeweils durch eine gebogene Wand (34) gebildet sind, die in ihrem Mittelteil durch eine Versteifungsrippe (35) abgestützt ist.

7. Drehvorrichtung nach einem der Ansprüche 1 bis 6,
dadurch gekennzeichnet,
daß wenigstens einer der Lageransätze (32) unmittelbar selbst einen Gleitschuh für den zentralen zylindrischen Kern (11) bildet.

8. Drehvorrichtung nach einem der Ansprüche 1 bis 6,
dadurch gekennzeichnet,
daß wenigstens einem der Lageransätze (32) eine Lamelle (36) zugeordnet ist, die zwischen diesem Lageransatz und dem zentralen zylindrischen Kern (11) angeordnet ist und einen Gleitschuh für diesen zentralen zylindrischen Kern (11) bildet.

9. Drehvorrichtung nach Anspruch 8,
dadurch gekennzeichnet,
daß der Lageransatz (32) zwischen zwei Gegenansätzen (38) angeordnet ist, die sich radial in einer zu der des Lageransatzes entgegengesetzten Richtung erstrecken, wobei zwischen den Gegenansätzen und dem Lageransatz die zugeordnete Lamelle (36) frei eingesetzt ist.

10. Drehvorrichtung nach Anspruch 9,
dadurch gekennzeichnet,
daß die einem Lageransatz (32) zugeordnete Lamelle (36) axial auf einer Seite durch den zentralen zylindrischen Kern (11) und auf der gegenüberliegenden Seite durch den ringförmigen Körper (12) gehalten ist.

11. Drehvorrichtung nach Anspruch 10,
dadurch gekennzeichnet,
daß der zentrale zylindrische Kern (11) an seinem Außenumfang eine Felge (16) aufweist, die sich parallel zu seiner Achse A erstreckt und mit der die Lageransätze (32) des ringförmigen Körpers (12) zusammenwirken, und daß die einem solchen Lageransatz (32) zugeordnete Lamelle (36) axial auf einer Seite durch einen Rücksprung (20) gehalten ist, der die Felge (16) radial begrenzt.

12. Drehvorrichtung nach einem der Ansprüche 1 bis 11,
dadurch gekennzeichnet,
daß der ringförmige Körper (12) aus zwei Halbkörpern (21) gebildet ist, die, an einer gemeinsamen Verbindungsfläche (22) einander ordnungsgemäß gegenüberliegend und ordnungsgemäß miteinander verbunden, zwischen zwei Querschultern (23) den zentralen zylindrischen Kern (11) frei einschließen, und daß an beiden Halbkörpern (21) Lageransätze (32) vorgesehen sind.

13. Drehvorrichtung nach Anspruch 12,
dadurch gekennzeichnet,
daß die beiden den ringförmigen Körper (12) bildenden Halbkörper (21) nur punktweise über Befestigungszonen (24) fest miteinander verbunden sind, die in gegenseitigem Abstand zueinander über dem Umfang vorgesehen sind, und daß jeder Lageransatz (32) radial auf der geraden Linie durch eine solche Befestigungszone (24) vorgesehen ist.

14. Drehvorrichtung nach Anspruch 13,
dadurch gekennzeichnet,
daß soviele Lageransätze (32) wie Befestigungszonen (24) vorgesehen sind.

## Claims

1. A rotary device of the type comprising a cylindrical central core (11) mounted rotatably in an annular body (12) which, intervening between them, for guiding the cylindrical central core (11) in rotation, at least two support bosses (32) which are circumferentially spaced from each other characterised in that the annular body (12) comprises the support bosses (32) locally in radially projecting relationship on its internal periphery in such a way that the one and the other of them are fixed.

2. A rotary device according to claim 1 characterised in that the annular body (12) comprises at least three support bosses (32) in circularly distributed relationship.

3. A rotary device according to either one of claims 1 and 2 characterised in that the annular body (12) comprises six support bosses (32).

4. A rotary device according to any one of claims 1 to 3 characterised in that the support bosses (32) are in one piece with the annular body (12).

5. A rotary device according to any one of claims 1 to 4 characterised in that the support bosses (32) are convex overall.

6. A rotary device according to claim 5 characterised in that the support bosses (32) are each individually formed by an arched wall (34) which is supported by a stiffening rib (35) in its central part.

7. A rotary device according to any one of claims 1 to 6 characterised in that one at least of the support bosses (32) constitutes directly by itself a slide shoe for the cylindrical central core (11).

8. A rotary device according to any one of claims 1 to 6 characterised in that associated with one at least of the support bosses (32) is a plate portion (36) which, interposed between it and the cylindrical central core (11), constitutes a slide shoe for said cylindrical central core (11).

9. A rotary device according to claim 8 characterised in that the support boss (32) is flanked by two counter-bosses (38) which extend radially in the opposite direction thereto and between which and it is freely inserted the associated plate portion (36).

10. A rotary device according to claim 9 characterised in that the plate portion (36) associated with a support boss (32) is axially retained on the one side by the cylindrical central core (11) and on the side opposite to the previous side by the annular body (12).

11. A rotary device according to claim 10 characterised in that, the cylindrical central core (11) comprising at its external periphery a rim portion (16) which extends parallel to its axis (A) and with which the support bosses (22) of the annular body (12) co-operate, the plate portion (36) associated with such a support boss (32) is retained axially on one side by a return portion (20) which radially borders said rim portion (16).

12. A rotary device according to any one of claims 1 to 11 characterised in that, the annular body (12) being formed by two half-bodies (21) which, appropriately fitted edge-to-edge to each other at a common connecting surface (22) and appropriately fixed together, freely enclose the cylindrical central core (11) between two transverse shoulders (23), there are support bosses (32) on both of said half-bodies (21).

13. A rotary device according to claim 12 characterised in that the two half-bodies (21) constituting the annular body (12) being fixed together only in a punctiform manner by fixing zones (24) which are disposed circumferentially at spacings from each other, each of the support bosses (32) is disposed radially in line with such a fixing zone (24).

14. A rotary device according to claim 13 characterised in that there are as many support bosses (32) as fixing zones (24).
